# EUROPEAN PATENT APPLICATION

(11) **EP 4 553 641 A1**
(43) Date of publication of application: **14.05.2025**
(21) Application number: 24206874.0
(22) Date of filing: 16.10.2024
(51) Int. Cl.: G06F 3/147, B60K 35/10, B60K 35/22, B60K 35/29

(54) **DISPLAY SYSTEM AND SYSTEM CHIP**

(30) Priority: 07.11.2023 CN 202311472720
(71) Applicant: Innolux Corporation, Jhunan Science Park 35053 (TW); Carux Technology Pte. Ltd., Singapore 339510 (SG)
(72) Inventor: LIN, Chin-Hung, Tainan 74147 (TW); MAO, Hsu-Jen, Tainan 74147 (TW); HU, Che-Chang, Tainan 74147 (TW); KUO, Ai-Ling, Jhunan Town, Miaoli County 35053 (TW)
(74) Representative: Becker, Eberhard

(57) **Abstract**

A display system (200, 300, 400) includes a display (210), a plurality of first sensor devices (220_1, 220_2, 220_3, 220_4), and a system chip (230). The first sensor devices (220_1, 220_2, 220_3, 220_4) are configured to provide a plurality of detection signals (S1). The system chip (230) is electrically connected to the display (210) and the first sensor devices (220_1, 220_2, 220_3, 220_4). The system chip (230) includes an image processor circuit (232), a central processor circuit (234), and a timing controller circuit (236). The image processor circuit (232) is configured to analyze the detection signals (S1). The central processor circuit (234) is configured to generate an integrated command (S2) according to the analyzed plurality of detection signals (S1). The timing controller circuit (236) is configured to drive the display (210) to display an image according to the integrated command (S2).

## Description

### BACKGROUND

### Technical Field

The invention relates to a display system and a system chip, and in particular, relates to a display system and a system chip of a transportation apparatus.

### Description of Related Art

A vehicle may include a display and a plurality of sensor devices to monitor and analyze whether the driver or the passenger has violated the regulations and then provide safety warnings. However, in the related art, the sensor device module and the display module are independently designed. For car manufacturers, all images must be analyzed at the head end, so a large data transmission bandwidth is required.

### SUMMARY

The invention provides a display system including a display, a plurality of first sensor devices, and a system chip. The first sensor devices are configured to provide a plurality of detection signals. The system chip is electrically connected to the display and the first sensor devices. The system chip includes an image processor circuit, a central processor circuit, and a timing controller circuit. The image processor circuit is electrically connected to the first sensor devices. The image processor circuit is configured to analyze the detection signals. The central processor circuit is electrically connected to the image processor circuit. The central processor circuit is configured to generate an integrated command according to the analyzed plurality of detection signals. The timing controller circuit is electrically connected to the central processor circuit. The timing controller circuit is configured to drive the display to display an image according to the integrated command.

The invention further provides a system chip. The system chip is suitable for a display system. The display system includes a display and a plurality of first sensor devices. The first sensor devices are configured to provide a plurality of detection signals. The system chip includes an image processor circuit, a central processor circuit, and a timing controller circuit. The image processor circuit is electrically connected to the first sensor devices. The image processor circuit is configured to analyze the detection signals. The central processor circuit is electrically connected to the image processor circuit. The central processor circuit is configured to generate an integrated command according to the analyzed plurality of detection signals. The timing controller circuit is electrically connected to the central processor circuit. The timing controller circuit is configured to drive the display to display an image according to the integrated command.

To make the aforementioned more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate exemplary embodiments of the invention and, together with the description, serve to explain the principles of the invention.
FIG. 1 is a schematic block diagram illustrating a transportation apparatus according to an embodiment of the invention.
FIG. 2 is a schematic block diagram illustrating a display system of FIG. 1 according to an embodiment.
FIG. 3 is a schematic block diagram illustrating a display system according to an embodiment of the invention.
FIG. 4 is a flow chart illustrating a method for operating the display system of FIG. 3 according to an embodiment.
FIG. 5 is a schematic block diagram illustrating a display system according to another embodiment of the invention.
FIG. 6 is a flow chart illustrating a method for operating the display system of FIG. 5 according to an embodiment.

### DESCRIPTION OF THE EMBODIMENTS

The accompanying drawings are included together with the detailed description provided below to provide a further understanding of the invention. Note that in order to make the accompanying drawings to be more comprehensible to readers and for the sake of clarity of the accompanying drawings, only part of the electronic device is depicted in the accompanying drawings of the invention, and specific devices in the drawings are not depicted according to actual scales. Moreover, the quantity and the size of each device in the drawings are only schematic and exemplary and are not intended to limit the scope of protection provided in the invention.

In the following specification and claims, the words "containing" and "including" are open-ended words and therefore should be interpreted as "containing but not limited to...".

It should be understood that although the terms "first", "second", "third"... may be used to describe various constituent devices, the constituent devices are not limited to these terms. These terms are only used to distinguish a single constituent device from other constituent devices in the specification. The same terms may not be used in the claims, and the devices in the claims may be replaced with first, second, third... according to the order declared by the devices in the claims. Therefore, in the following description, the first constituent device may be the second constituent device in the claims.

In some embodiments of the invention, regarding the words such as "connected", "interconnected", etc. referring to bonding and connection, unless specifically defined, these words mean that two structures are in direct contact or two structures are not in direct contact, and other structures are provided to be disposed between the two structures. The word for joining and connecting may also include the case where both structures are movable or both structures are fixed. In addition, the word "coupled" may include to any direct or indirect electrical connection means. In the case of direct electrical connection, the terminals of the devices on the two circuits are directly connected or connected to each other by a conductor line segment. In the case of indirect electrical connection, a switch, diode, capacitor, inductor, resistor, other suitable devices, or a combination of the above components is provided between the terminals of the devices on the two circuits, but the invention is not limited thereto.

The electronic apparatus of the invention may include but not limited to a display device, an antenna device, a sensing device, a light emitting device, or a stitched device. The electronic apparatus may be a bendable or flexible electronic apparatus. The electronic apparatus may include an electronic device. The electronic apparatus includes, for example, a liquid crystal layer or a light emitting diode (LED). The electronic device may include but not limited to a passive device and an active device, such as a capacitor, a resistor, an inductor, a variable capacitor, a filter, a diode, a transistor, a sensor, a microelectromechanical system (MEMS) device, a liquid crystal chip, a controller, etc. The diode may include a LED or a photodiode. The LED may include but not limited to an organic LED (OLED), a mini LED, a micro LED, or a quantum dot LED, fluorescence, phosphor, or other suitable materials or a combination of the foregoing. The sensor may include but not limited to a capacitive sensor, an optical sensor, an electromagnetic sensor, a fingerprint sensor (FPS), a touch sensor, an antenna, or a pen sensor, etc. The controller may include but not limited to a timing controller, etc. In the following, a display device will be used as an electronic device to illustrate the invention, but the invention is not limited thereto.

Descriptions of the invention are given with reference to the exemplary embodiments illustrated by the accompanying drawings. Wherever possible, the same reference numbers are used in the drawings and the description to refer to the same or like parts.

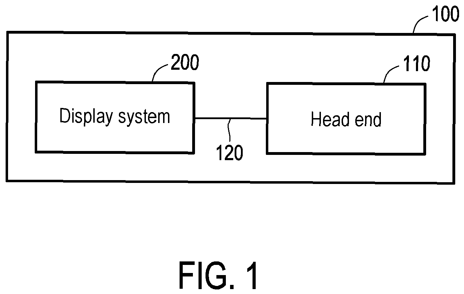

FIG. 1 is a schematic block diagram illustrating a transportation apparatus according to an embodiment of the invention. With reference to FIG. 1, a transportation apparatus 100 includes a head end 110. A display system 200 is used in the transportation apparatus 100. The display system 200 is electrically connected to the head end 110 through a connecting line (bus line) 120. The transportation apparatus 100 is a vehicle that can carry people, including a car, an airplane, or a ship. Taking a car as an example, the connecting line 120 is, for example, a vehicle bus line of a controller area network (CAN).

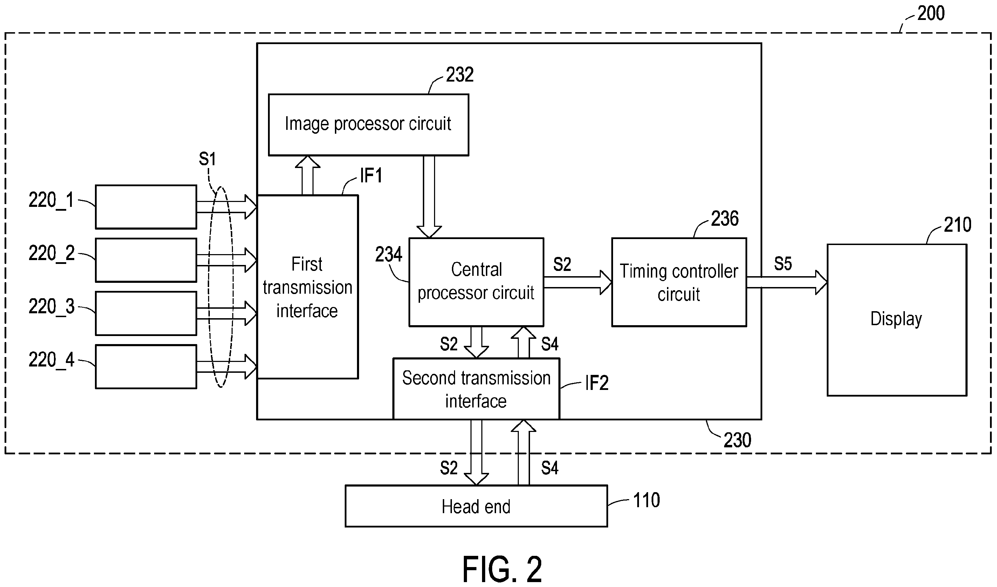

FIG. 2 is a schematic block diagram illustrating a display system of FIG. 1 according to an embodiment. With reference to FIG. 2, the display system 200 includes a display 210, a plurality of first sensor devices 220_1, 220_2, 220_3, and 220_4, and a system chip 230.

The display 210 includes a liquid crystal display, a light emitting diode display, or an organic light emitting diode display. The first sensor devices 220_1, 220_2, 220_3, and 220_4 are configured to provide a plurality of detection signals S1 to the system chip 230. The first sensor devices 220_1, 220_2, 220_3, and 220_4 are sensor devices of the same type, such as infrared sensors or charge coupled devices (CCDs). The number and type of the first sensor devices are not intended to limit the invention.

The system chip 230 is electrically connected to the display 210 and the first sensor devices 220_1, 220_2, 220_3, and 220_4. A first transmission interface IF1 includes, for example, a mobile industry processor interface (MIPI), an Ethernet interface, or a wireless network communication technology (Wireless Fidelity, Wi-Fi) interface. The system chip 230 is electrically connected to the head end 110 through a second transmission interface IF2. The second transmission interface IF2 includes, for example, a CAN interface.

The system chip 230 includes an image processor circuit 232, a central processor circuit 234, and a timing controller circuit 236. The image processor circuit 232 is electrically connected to the first sensor devices 220_1, 220_2, 220_3, and 220_4 through the first transmission interface IF1. The central processor circuit 234 is electrically connected to the image processor circuit 232. The central processor circuit 234 is electrically connected to the head end 110 through the second transmission interface IF2. The timing controller circuit 236 is electrically connected to the central processor circuit 234. The image processor circuit 232 is configured to analyze the detection signals S1 provided by the first sensor devices 220_1, 220_2, 220_3, and 220_4 and output the analyzed detection signals S1 to the central processor circuit 234. The central processor circuit 214 is configured to generate an integrated command S2 according to the analyzed detection signals S1 and provide the integrated command S2 to the timing controller circuit 236. The integrated command S2 includes image content to be displayed on the display 210 and optimized by the image processor circuit 232. The timing controller circuit 236 is configured to drive the display 210 to display an image according to the integrated command S2.

The integrated command S2 is provided to both the timing controller circuit 236 and the head end 110. For instance, the central processor circuit 234 outputs the integrated command S2 to the head end 110 through the second transmission interface IF2. The head end 110 may control the transportation apparatus 100 to perform a corresponding action according to the integrated command S2.

In this embodiment, the image processor circuit 232, the central processor circuit 234, and the timing controller circuit 236 may include a controller or a processor, which are circuit devices with computing capabilities. Alternatively, the controller or the processor included by the processor circuits may be designed through hardware description language (HDL) or any other digital circuit design well known to a person having ordinary skill in the art and may be a hardware circuit that may be implemented through a field programmable gate array (FPGA), a complex programmable logic device (CPLD), or an application-specific integrated circuit (ASIC). The image processor circuit 232 may also be an image processing module implemented as a plurality of program codes. These program codes are stored in the memory and executed by circuit devices with computing capabilities to perform corresponding image processing operations. In the invention, the implementation of each circuit module in the system chip 230 is not limited to software or hardware.

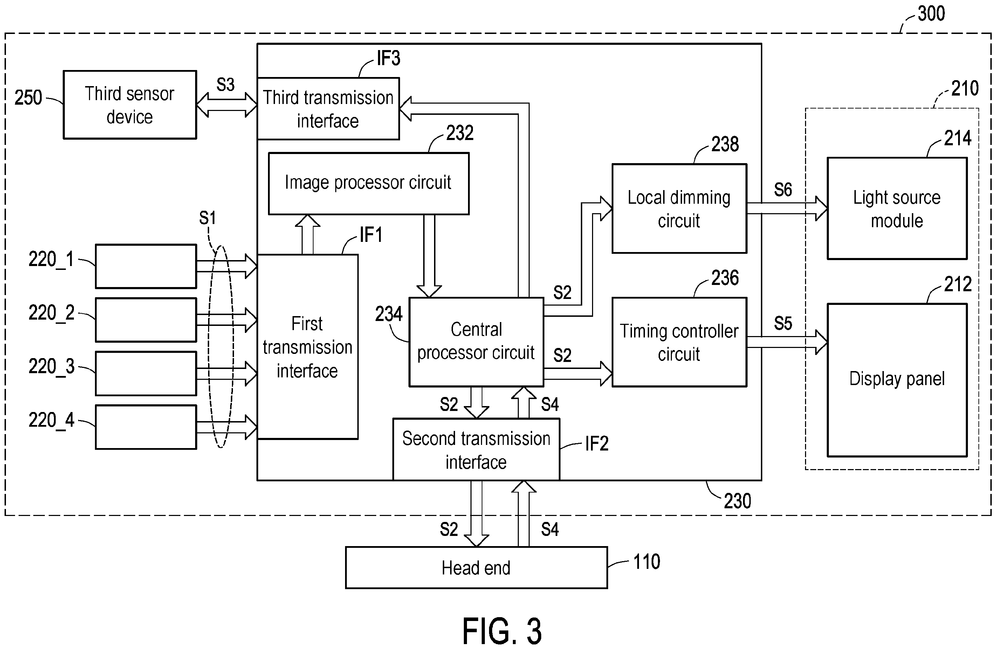

FIG. 3 is a schematic block diagram illustrating a display system according to an embodiment of the invention. With reference to FIG. 3, a display system 300 further includes a third sensor device 250, and the system chip 230 further includes a local dimming circuit 238. The display 210 includes a display panel 212 and a light source module 214. The third sensor device 250 is electrically connected to the system chip 230. The local dimming circuit 238 is electrically connected to the central processor circuit 234.

To be specific, the third sensor device 250 is electrically connected to the central processor circuit 234 through a third transmission interface IF3. The third transmission interface IF3 is, for example, an inter-integrated circuit (I2C) interface. The third sensor device 250 is, for example, an ambient light sensor for providing an ambient light signal S3. The number and type of the third sensor device are not intended to limit the invention.

The head end 110 generates a first image signal S4 according to the integrated command S2. The first image signal S4 is provided to the central processor circuit 234 through the second transmission interface IF2. For instance, when the head end 110 intends to provide a safety warning through the display 210, the first image signal S4 may be provided to the central processor circuit 234. The central processor circuit 234 then drives the timing controller circuit 236 and the local dimming circuit 238 according to the first image signal S4. The timing controller circuit 236 provides a second image signal S5 to the display panel 212 to drive the display panel 212 to display an image frame. The image frame includes the safety warning. The local dimming circuit 238 provides a third image signal S6 to the light source module 214 to control the light source module 214 to perform a local dimming function.

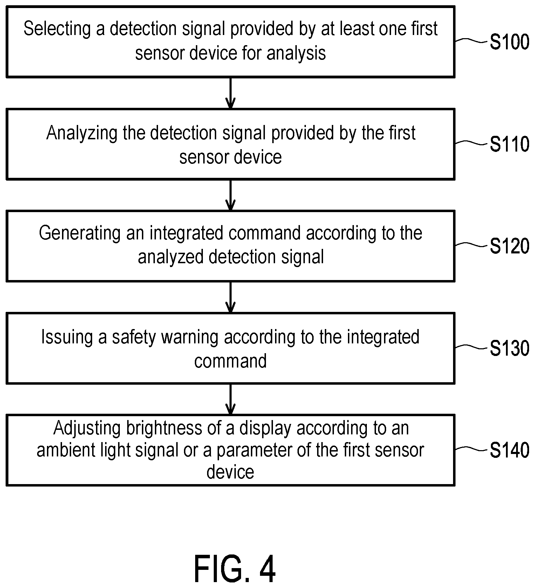

FIG. 4 is a flow chart illustrating a method for operating the display system of FIG. 3 according to an embodiment. With reference to FIG. 3 and FIG. 4, taking a vehicle as an example, the display system 300 in the embodiment of FIG. 3 is, for example, an electronic apparatus applied in a vehicle cockpit system. Therefore, the display system 300 includes a vehicle display, which can receive a data signal and an image signal from a device such as a vehicle machine or an electronic control unit (ECU) to display dashboard information and image information respectively. However, in the invention, it is not limited to receiving signals from the vehicle machine and the electronic control unit.

The first sensor devices 220_1, 220_2, and 220_3 are arranged in the front seat of the vehicle, for example, and the first sensor device 220_4 is arranged in the back seat of the vehicle, for example. The image processor circuit 232 may select the detection signals S1 for analysis according to the actual conditions in the vehicle. For instance, the first sensor devices 220_1, 220_2,220_3, and 220_4 may perform preliminary scanning first. If the central processor circuit 234 determines that there is no one in the back seat, the image processor circuit 232 may select the detection signals S1 of the three first sensor devices 220_1, 220_2, and 220_3 in the front seat for analysis. That is, the image processor circuit 232 analyzes the detection signals S 1 provided by the first sensor devices 220_1, 220_2, and 220_3 in the front seat but does not analyze the detection signal S 1 provided by the first sensor device 220_4 in the back seat. Further, the central processor circuit 234 may also determine whether there is someone in the back seat based on whether the door of the back seat has been opened first or the time it has been opened. In another embodiment, the selection of the first sensor devices 220_1, 220_2, 220_3, and 220_4 may also be determined by a driver through a vehicle interface. The vehicle interface includes a mobile phone application or a vehicle control panel.

Therefore, in step S100, the image processor circuit 232 selects, for example, the detection signals S1 provided by the first sensor devices 220_1, 220_2, and 220_3 for analysis. Next, in step S110, the image processor circuit 232 analyzes the detection signals S1 provided by the first sensor devices 220_1, 220_2, and 220_3, for example, analyzes the image content of the detection signals S1 to determine in real time whether the driver or the passenger has violated the regulations. The image processor circuit 232 may also perform conventional image processing operations on the image content of the detection signals S1, such as optimizing image characteristics such as image resolution and image brightness, to improve the image display quality of the display 210. The image processor circuit 232 provides an image processing result (i.e., the analyzed detection signals S) to the central processor circuit 234.

In step S120, the central processor circuit 214 generates the integrated command S2 according to the analyzed detection signals S 1 and provide the integrated command S2 to the head end 110. For instance, the central processor circuit 234 may provide a flag related to a driving behavior detection system (driver monitoring system, DMS) to the head end 110 to inform the head end 110 whether the driver or the passenger has violated the regulations, and the head end 110 may issue a safety warning. In other words, the central processor circuit 234 does not need to provide a large amount of image data to the head end 110, and the head end 110 does not need to perform image processing operations. According to the integrated command S2 (including the DMS flag) provided by the central processor circuit 234, the head end 110 may learn whether the driver or the passenger has violated the regulations, and thereby issue a safety warning. In this way, a bandwidth of image data transmitted by the central processor circuit 234 to the head end 110 may be significantly reduced. The violations include dozing off, turning one's head, being out of the seat, or taking one's hands off the steering wheel.

In addition, since the integrated command S2 includes the image processing result, the central processor circuit 234 also provides the integrated command S2 to the timing controller circuit 236 and the local dimming circuit 238, so that the timing controller circuit 236 and the local dimming circuit 238 may respectively perform the image driving function and the local dimming function.

In step S130, the head end 110 issues a safety warning according to the integrated command S2. The safety warning information includes controlling the vehicle to display a warning, automatic braking, a sound warning, or exterior display. Alternatively, the safety warning includes notifying a specific mobile phone that the vehicle may be driving dangerously at this moment. Alternatively, the safety warning includes a location that informs the Global Positioning System (GPS) that an incident has occurred.

In step S140, the third sensor device 250 may detect the intensity of ambient light and provide the ambient light signal S3 to the central processor circuit 234. The central processor circuit 234 adjusts brightness of the display 210 according to the ambient light signal S3 or adjusts parameters of the first sensor devices 220_1, 220_2, 220_3, and 220_4 according to the ambient light signal S3, so that the first sensor devices 220_1, 220_2, 220_3, and 220_4 may provide improved detection results.

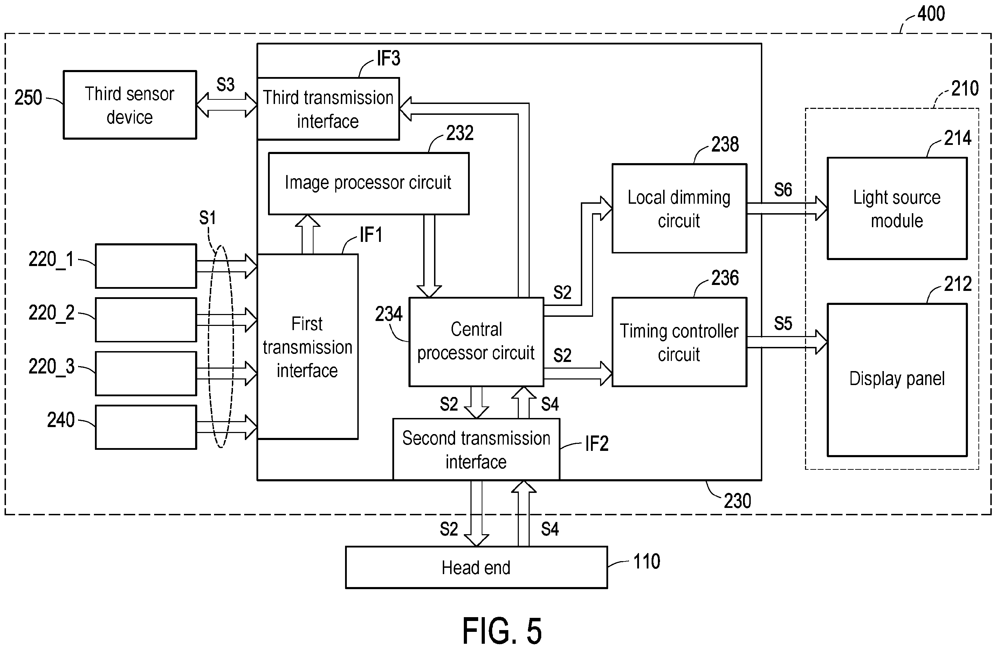

FIG. 5 is a schematic block diagram illustrating a display system according to another embodiment of the invention. With reference to FIG. 5, a display system 400 further includes a second sensor device 240. The second sensor device 240 is electrically connected to the system chip 230. To be specific, the second sensor device 240 is electrically connected to the image processor circuit through the first transmission interface IF1. The first sensor devices 220_1, 220_2, and 220_3 and the second sensor device 240 are different types of sensor devices. For instance, the first sensor devices 220_1, 220_2, and 220_3 are infrared sensors or CCDs, and the second sensor device 240 is a structured light sensor. The numbers and types of the first sensor devices and the second sensor device are not intended to limit the invention.

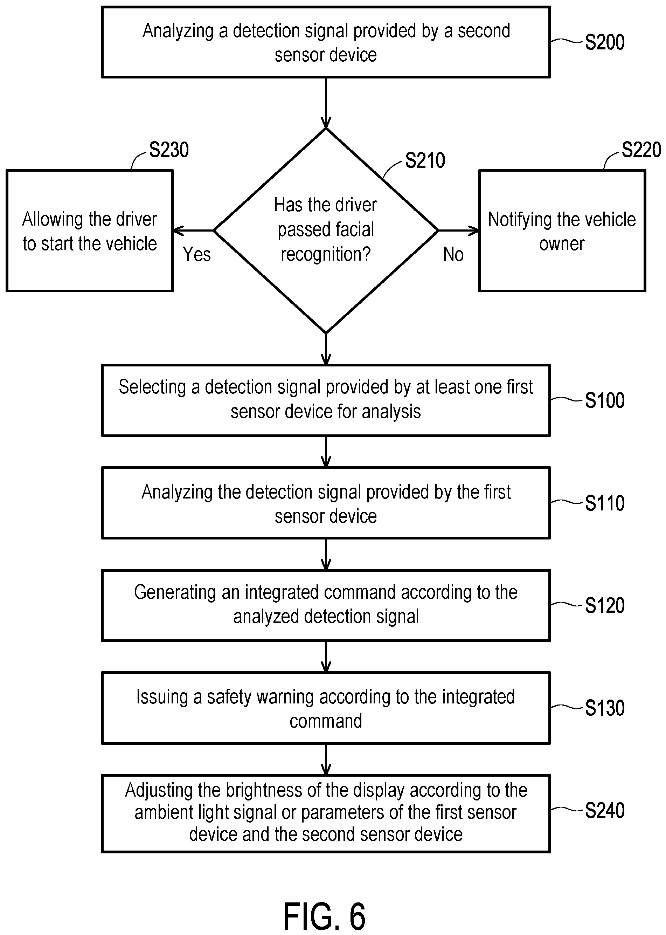

FIG. 6 is a flow chart illustrating a method for operating the display system of FIG. 5 according to an embodiment. With reference to FIG. 5 and FIG. 6, in this embodiment, the image processor circuit 232 selects data provided by the second sensor device 240 for analysis first (step S200) and then selects data provided by the first sensor devices 220_1, 220_2, and 220_3 for analysis (step S100). In step S200, the image processor circuit 232 analyzes the detection signal S 1 provided by the second sensor device 240 for analysis to perform facial recognition on the driver.

In step S210, if the central processor circuit 234 determines that the driver fails to pass facial recognition, the flow of the method will proceed to step S220. In step S220, the head end 110 may notify the vehicle owner through a mobile phone that the vehicle may be stolen or notify the vehicle owner of the current location of the vehicle through the Global Positioning System (GPS). In step S210, if the central processor circuit 234 determines that the driver passes facial recognition, the flow of the method will proceed to step S230. In step S230, the head end 110 may allow the driver to start the vehicle.

In step S240, the central processor circuit 234 adjusts the brightness of the display 210 according to the ambient light signal S3 or adjusts parameters of the first sensor devices 220_1, 220_2, and 220_3 and the second sensor device 240, so that the first sensor devices 220_1, 220_2, and 220_3 and the second sensor device 240 may provide improved detection results. In step S210, if the central processor circuit 234 determines that the driver fails to pass facial recognition, the flow of the method may also choose to proceed to step S240. In step S240, the central processor circuit 234 adjusts the parameters of the second sensor device 240 according to the ambient light signal S3 to perform facial recognition on the driver again.

In view of the foregoing, in the embodiments of the display, the sensor devices may be arranged in the display, and the system chip is arranged on a motherboard. The system chip integrates image processing functions, display driver functions, and regional dimming functions. The system chip can analyze images in real time and notify the head end for processing in real time when violations are found, so that the bandwidth of image transmission between the system chip and the head end is reduced.

## Claims

1. A display system (200, 300, 400), comprising:
a display (210);
a plurality of first sensor devices (220_1, 220_2, 220_3, 220_4) configured to provide a plurality of detection signals (S1); and
a system chip (230) electrically connected to the display (210) and the plurality of first sensor devices (220_1, 220_2, 220_3, 220_4), wherein the system chip (230) comprises:
an image processor circuit (232) electrically connected to the plurality of first sensor devices (220_1, 220_2, 220_3, 220_4) and configured to analyze the plurality of detection signals (51) ;
a central processor circuit (234) electrically connected to the image processor circuit (232) and configured to generate an integrated command (S2) according to the analyzed plurality of detection signals (S1); and
a timing controller circuit (236) electrically connected to the central processor circuit (234) and configured to drive the display (210) to display an image according to the integrated command (S2).

2. The display system (200, 300, 400) according to claim 1, wherein the display system (200, 300, 400) is used in a transportation apparatus (100), the transportation apparatus (100) comprises ahead end (110), and the system chip (230) is electrically connected to the head end (110) through a connecting line (120).

3. The display system (200, 300, 400) according to claim 2, wherein the integrated command (S2) is provided to both the timing controller circuit (236) and the head end (110), and the head end (110) controls the transportation apparatus (100) to perform a corresponding action according to the integrated command (S2).

4. The display system (200, 300, 400) according to claim 2, wherein the integrated command (S2) is provided to the head end (110), the head end (110) generates a first image signal (S4) according to the integrated command (S2), and the first image signal (S4) is provided to the central processor circuit (234).

5. The display system (200, 300, 400) according to claim 4, wherein the system chip (230) further comprises a local dimming circuit (238) electrically connected to the central processor circuit (234), the display (210) comprises a display panel (212) and a light source module (214), the timing controller circuit (236) provides a second image signal (S5) to the display panel (212), and the local dimming circuit (238) provides a third image signal (S6) to the light source module (214).

6. The display system (200, 300, 400) according to claim 2, wherein the connecting line (120) is a bus line.

7. The display system (200, 300, 400) according to claim 1, wherein the display (210) comprises a liquid crystal display, a light emitting diode display, or an organic light emitting diode display.

8. The display system (200, 300, 400) according to claim 1, further comprising a second sensor device (240) electrically connected to the system chip (230), wherein the plurality of first sensor devices (220_1, 220_2, 220_3, 220_4) and the second sensor device (240) are different types of sensor devices.

9. The display system (200, 300, 400) according to claim 8, wherein the image processor circuit (232) selects data provided by the second sensor device (240) for analysis first and then selects data provided by the plurality of first sensor devices (220_1, 220_2, 220_3, 220_4) for analysis.

10. The display system (200, 300, 400) according to claim 8, further comprising a third sensor device (250) electrically connected to the system chip (230) and configured to provide an ambient light signal (S3), wherein the central processor circuit (234) adjusts brightness of the display (210) or parameters of the plurality of first sensor devices (220_1, 220_2, 220_3, 220_4) and the second sensor device (240) based on the ambient light signal (S3).

11. A system chip (230) suitable for a display system (200, 300, 400) comprising a display (210) and a plurality of first sensor devices (220_1, 220_2, 220_3, 220_4) configured to provide a plurality of detection signals (S1), the system chip (230) comprising:
an image processor circuit (232) electrically connected to the plurality of first sensor devices (220_1, 220_2, 220_3, 220_4) and configured to analyze the plurality of detection signals (S1);
a central processor circuit (234) electrically connected to the image processor circuit (232) and configured to generate an integrated command (S2) according to the analyzed plurality of detection signals (S1); and
a timing controller circuit (236) electrically connected to the central processor circuit (234) and configured to drive the display (210) to display an image according to the integrated command (S2).

12. The system chip (230) according to claim 11, wherein the display system (200, 300, 400) is used in a transportation apparatus (100), the transportation apparatus (100) comprises a head end (110), and the system chip (230) is electrically connected to the head end (110) through a connecting line (120).

13. The system chip (230) according to claim 12, wherein the integrated command (S2) is provided to both the timing controller circuit (236) and the head end (110), and the head end (110) controls the transportation apparatus (100) to perform a corresponding action according to the integrated command (S2).

14. The system chip (230) according to claim 12, wherein the integrated command (S2) is provided to the head end (110), the head end (110) generates a first image signal (S4) according to the integrated command (S2), and the first image signal (S4) is provided to the central processor circuit (234).

15. The system chip (230) according to claim 14, wherein the system chip (230) further comprises a local dimming circuit (238) electrically connected to the central processor circuit (234), the display (210) comprises a display panel (212) and a light source module (214), the timing controller circuit (236) provides a second image signal (S5) to the display panel (212), and the local dimming circuit (238) provides a third image signal (S6) to the light source module (214).
